Europäisches Patentamt

(19) European Patent Office

Office européen des brevets

(11) Veröffentlichungsnummer: **0 005 485**

**B1**

(12) **EUROPÄISCHE PATENTSCHRIFT**

(45) Veröffentlichungstag der Patentschrift: **03.11.82**

(51) Int. Cl.³: **B 62 B 13/12**

(21) Anmeldenummer: **79101363.4**

(22) Anmeldetag: **04.05.79**

(54) **Schlitten mit verkantbaren Kufen.**

(30) Priorität: **12.05.78 DE 2820803**
**11.11.78 DE 2848959**
**21.02.79 DE 2906628**

(43) Veröffentlichungstag der Anmeldung:
**28.11.79 Patentblatt 79/24**

(45) Bekanntmachung des Hinweises auf die Patenterteilung:
**03.11.82 Patentblatt 82/44**

(84) Benannte Vertragsstaaten:
**AT CH DE FR SE**

(56) Entgegenhaltungen:
**CA - A - 987 378**
**CH - A - 452 362**
**CH - A - 545 217**
**DE - A - 2 340 989**
**DE - B - 1 279 482**
**DE - C - 746 677**
**FR - A - 833 762**
**FR - A - 1 249 950**
**FR - A - 2 079 679**
**FR - A - 2 380 931**
**US - A - 3 398 970**

(73) Patentinhaber: **Scheib, Rudi**
**Panoramastrasse 13**
**D-7900 Ulm/Donau (DE)**

(72) Erfinder: **Scheib, Rudi**
**Panoramastrasse 13**
**D-7900 Ulm/Donau (DE)**

(74) Vertreter: **Beier, Joachim, Dipl.-Ing et al,**
**Patentanwälte Dipl.-Chem. Dr. Ruff und Dipl.-Ing.**
**J. Beier Neckarstrasse 50**
**D-7000 Stuttgart 1 (DE)**

Courier Press, Leamington Spa, England.

### Schlitten mit verkantbaren Kufen

Die Erfindung betrifft einen Schlitten mit verkantbaren Kufen und wenigstens zwei etwa parallel verschwenkbaren, die Kufen mit Hilfe von Kufengelenken derart verbindenden Verbindungsgliedern, daß bei der Verkantung zumindest einander entsprechende Abschnitte der Kufen im wesentlichen in Längsrichtung gegeneinander verschiebbar sind, sowie mit einem mit den Verbindungsgliedern mit Hilfe mindestens zweier Gelenke verbundenen Sitz, der bei Verkantung der Kufen verlagerbar ist, wobei die Achsen mindestens eines Kufengelenkes für jede Kufe und mindestens eines Sitzgelenkes in einer zur Kufenauflagefläche senkrechten, etwa parallel zur Längsrichtung verlaufenden Ebene liegen und die Achsen der Kufengelenke geneigt sind.

Ein derartiger Schlitten ist bereits bekannt (FR—A—833 762). Bei derartigen Schlitten kann das Wegrutschen, das bei schnellen sowie engen Kurvenfahrten und Fahrten entlang eines Hanges auftritt, verhindert und die Manövrierfähigkeit gegenüber einfachen Schlitten verbessert werden. Die Verkantung der Kufen erfolgt dabei simultan mit der Längsverschiebung der Kufen, bzw. mit dem parallelen Verschwenken der Verbindungsglieder, so daß schon eine relativ einfache Bedienbarkeit des Schlittens gegeben ist. Bei diesem Schlitten verläuft die Achse des Sitzbefestigungselementes an den Verbindungselementen senkrecht.

Es ist ebenfalls ein Schlitten bekannt (CH—A—545 217), bei dem der Sitz und die Kufen um in Längsrichtung verlaufende Achsen verkantbar sind. Zu diesem Zweck ist jede Kufe mit Hilfe eines leicht abgewandelten Parallelogrammgestänges an einem Sitz befestigt, wobei das Parallelogrammgestänge mit Hilfe von zwei Handhebeln verschwenkt werden kann. Eine Längsverschiebung der Kufen ist bei diesem Schlitten nicht möglich.

Ein ähnlicher Schlitten ist ebenfalls aus der DE—B—1 279 482 bekannt. Hierbei sind ebenfalls die Kufen mit Hilfe von Parallelogrammgestängen an einem Sitz befestigt, wobei die vorderen und hinteren Parallelogrammlenker miteinander verbunden sind. Die Kufen sind ebenfalls in Längsrichtung nicht verschiebbar.

Aufgabe der Erfindung ist es, einen Schlitten der eingangs genannten Art in Richtung auf eine verbesserte Funktion, leichtere Lenkbarkeit und einfachere Herstellbarkeit zu verbessern.

Diese Aufgabe wird dadurch gelöst, daß bei einem Schlitten der eingangs genannten Art erfindungsgemäß die Achse mindestens eines Sitzgelenks derart schräg verläuft, daß bei Verkantung der Kufen der Sitz in Richtung auf die nach vorn oder die nach hinten verschobene Kufe neigbar ist. Bei dem Schlitten nach der Erfindung tritt die Verkantung der Kufen, die Längsverschiebung der Kufen und die Verkantung bzw. Verkippung des Sitzes gleichzeitig auf. Dabei kann sowohl die Längsverschiebung der Kufen durch eine Verkippung des Sitzes als auch umgekehrt die Verkippung des Sitzes durch Längsverschiebung der Kufen hervorgerufen werden. Besonders günstig ist es, wenn die Achse mindestens eines Sitzgelenkes derart versetzt angeordnet ist, daß bei Verkantung der Kufen der Sitz in Richtung auf die nach vorn oder die nach hinten verschobene Kufe seitlich verschiebbar ist. Dies führt zu einer stärkeren Gewichtsbelastung dieser Kufe, so daß dies zum Steuern in Kurven ausgenutzt werden kann.

Es ist möglich, alle Gelenke zwischen den Verbindungsgliedern und den Kufen (im Falle von zwei Verbindungsgliedern vier) mit den schrägen Verkantungsachsen vorzusehen, es reicht jedoch an jeder Kufe nur eine der schrägen Verkantungsachsen aus, während die andere Verbindung jeweils über andere Gelenke mit mehreren Freiheitsgraden, beispielsweise Kugelgelenke, elastische Verbindungen, wie Gummilagerungen etc. ausgeführt werden können.

Nach zwei besonders bevorzugten Merkmalen der Erfindung können die Kufen abweichend von der Parallelen vorn einen geringeren Abstand voneinander haben als hinten und/oder in ihrer neutralen (Geradeausfahrt-)Stellung derart verkantet sein, daß ihre Innenkanten tiefer liegen als die Außenkanten.

Sowohl die leichte Pflugstellung als auch die Vor-Verkantung bewirken, daß der Schlitten einerseits sehr richtungsstabil laufen kann, andererseits aber auch durch entsprechende Gewichtsverlagerung bewußt Kurven fahren kann. Jedes dieser Merkmale bewirkt für sich eine Verbesserung im Sinne der gestellten Aufgabe. Besonders vorteilhaft wirken sie jedoch in Kombination.

Die Pflugstellung kann entweder dadurch erreicht werden, daß der Querabstand zwischen den Verkantungsachsen des vorderen Verbindungsgliedes geringer gemacht wird als derjenige der hinteren Verbindungsglieder. Da die Abweichung der Kufenlängsrichtungen von der Mittellinie des Schlittens vorzugsweise relativ gering ist und weniger als 4° beträgt, kann es aber auch bereits ausreichen, daß bei gleichen Querabständen der Verkantungsachsen voneinander, d.h. bei identischen Verbindungsgliedern mit angebrachten Verkantungsachsen, die vorderen Gelenke mehr zur Außenkante und die hinteren mehr zur Innenkante der Kufen montiert werden.

Die Vor-Verkantung der Kufen ist vorteilhaft so gewählt, daß bei verkanteten Kufen, d.h. am Hang oder in der Kurve die vorgeschobene (kurvenäußere bzw. Tal) Kufe stärker verkantet ist als die andere Kufe. Auch dadurch wird das Kurvenverhalten verbessert. Die Vor-Verkantung kann auf verschiedene Arten erreicht werden. Einerseits ist es möglich, bei einem Schlitten durch entsprechende Ausbildung der an den Kufen befestigten Beschläge eine Schrägstellung der Kufen zu erreichen, z.B. durch schräge Auflageflächen oder Zwischenkeile. Es ist jedoch auch möglich, die Selbst-Verkantungswirkung der schrägen Verkantungsachsen hierzu zu verwenden. Dazu können die Verkantungsachsen in der Schnittlinie einer zur Schlittenauflagefläche senkrechten ersten Ebene und einer zur Kufenauflagefläche senkrechten zweiten Ebene liegen, wobei die Ebenen unter einem Winkel von weniger als 10° zueinander verlaufen. Das kann durch schräge Anbringung der an den Kufen und/oder den Verbindungsgliedern befestigten Beschlägteile der Verkantungsachsführung erreicht werden.

Es ist ferner festgestellt worden, daß ein weiteres vorteilhaftes Merkmal zur Lösung der genannten Aufgabe beiträgt, wonach der Sitz des Schlittens bei einer Verkantung der Kufen aus der neutralen Stellung heraus in Richtung auf die nach vorn verschobene, d.h. kurvenäußere bzw. Tal-Kufe verschoben wird. Die aus der Verkantung resultierende Neigung kann dabei zur anderen Kufe hin erfolgen, jedoch ergibt die Verschiebung zur kurvenäußeren bzw. Tal-Kufe eine verbesserte Gewichtsverteilung, die die Lenkeigenschaften positiv beeinflußt. Diese Verschiebung kann auf verschiedene Weise, vorteilhaft jedoch dadurch geschehen, daß die schrägen Sitzbefestigungsachsen gegenüber den Verkantungsachsen nach hinten versetzt angeordnet sind. Somit erfolgt die Verschiebung automatische mit der Schrägstellung der Verbindungsglieder.

Nach einer weiteren Ausführungsform der Erfindung können die Kufen in Längsrichtung geteilt und Kufenabschnitte, vorzugsweise die vorderen, zur Lenkung des Schlittens aus der Kufenachse der anderen (vorzugsweise hinteren) Kufenabschnitte auslenkbar sein, wobei die auslenkbaren Kufenabschnitte im wesentlichen parallel zueinander bleiben und vorzugsweise in Längsrichtung nicht gegeneinander verschoben sind. Dabei sind vorzugsweise die vorderen mit den hinteren Kufenabschnitten über je ein kardanartiges Gelenk verbunden. Bei dieser Ausführungsform wird also der Schlitten durch Änderung der Längsrichtung der vorderen und hinteren Kufenabschnitte gegeneinander gesteuert.

Weitere Vorteile und Merkmale von bevorzugten Ausführungsformen der Erfindung gehen aus den Unteransprüchen und der Beschreibung im Zusammenhang mit den Zeichnungen hervor.

Ausführungsbeispiele der Erfindung sind in den Zeichnungen dargestellt und werden im folgenden näher erläutert. Es zeigen:

Fig. 1 eine Seitenansicht einer ersten Ausführungsform eines Schlittens,

Fig. 2 ein teilweise geschnittenes Detail eines Gelenks,

Fig. 3 eine Rückansicht des Schlittens nach Fig. 1 mit unverkanteten Kufen,

Fig. 4 eine Rückansicht des hinteren Teils des Schlittens nach Fig. 1 mit verkanteten Kufen,

Fig. 5 eine Draufsicht auf den Schlitten nach Fig. 1 in seiner Stellung mit verkanteten Kufen mit nur strichliert angedeutetem Sitz,

Fig. 6 eine Alternative einer Sitzbefestigung in Seitenansicht,

Fig. 7 eine Rückansicht der Ausführungsform nach Fig. 6,

Fig. 8 eine Draufsicht auf eine weitere Ausführungsform eines Schlittens,

Fig. 9 einen Schlitten nach der Linie IX—IX in Fig. 8,

Fig. 10 eine Draufsicht auf zwei nach innen verkantete und in Pflugstellung befindliche Kufen einer Variante und die daran angebrachten, zum Erreichen dieser Position angeordneten Beschläge,

Fig. 11 eine Draufsicht in zur Lauffläche der Kufen senkrechter Richtung (in Richtung des Pfeils XI in Fig. 12),

Fig. 12 eine Darstellung entsprechend Fig. 9 der Ausführungsform nach den Fig. 10 und 11,

Fig. 13 eine Darstellung entsprechend Fig. 12 in einer Kurven- oder Schrägfahrtstellung,

Fig. 14 eine Seitenansicht eines Schlittens nach einer weiteren Ausführungsform und

Fig. 15 einen Detailschnitt nach der Linie XV—XV in Fig. 14,

Fig. 16 eine Seitenansicht einer weiteren Ausführungsform der Erfindung,

Fig. 17 eine Detailansicht nach der Linie XVII—XVII in Fig. 16,

Fig. 18 eine Draufsicht auf einen Schlitten entsprechend Fig. 16 in mit in Kurvenfahrt ausgelenkten Kufen und nur strichliert angedeutetem Sitz und

Fig. 19 eine perspektivische Ansicht des Schlittens in der Stellung nach Fig. 18.

Bei allen Ausführungsformen tragen vergleichbare Teile gleiche Bezugszeichen und auf ihre Beschreibung bei der anderen Ausführungsform wird Bezug genommen.

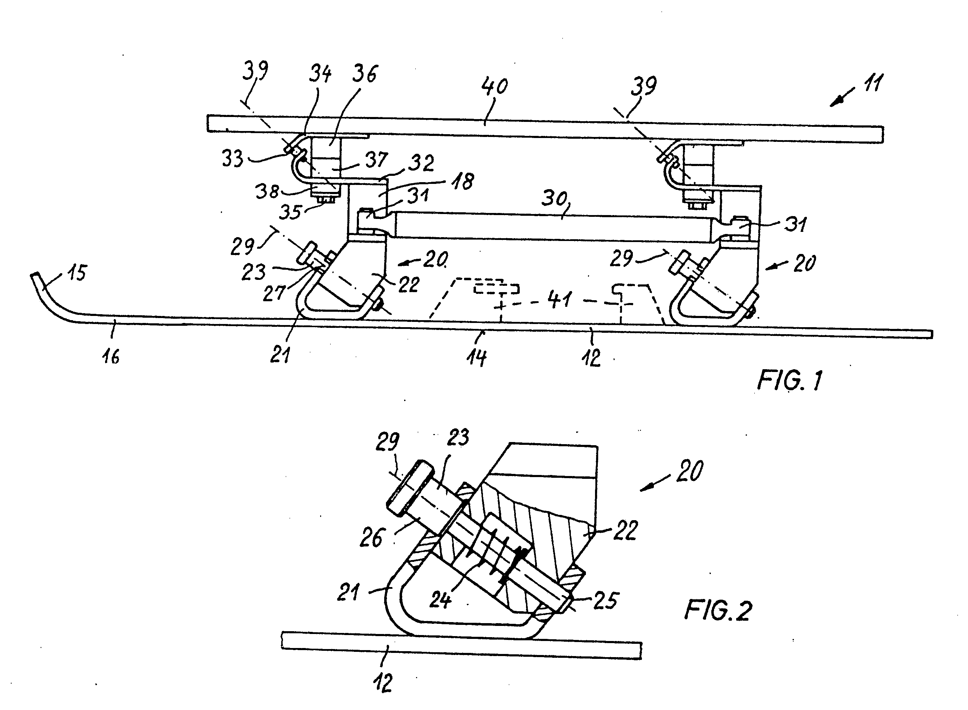

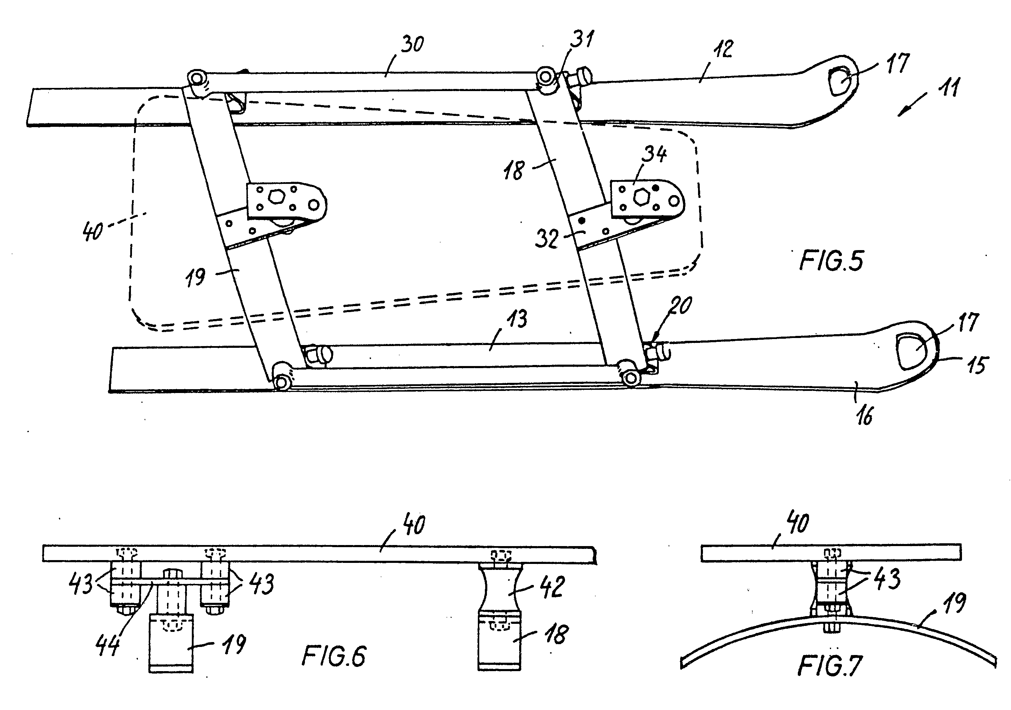

Der in den Fig. 1 bis 5 dargestellte Schlitten 11 besitzt zwei einteilige, skiähnliche Kufen 12, 13, die eine relativ breite, ebene Kufenauflagefläche oder Lauffläche 14 und an ihrem vorderen Ende eine aufwärts gebogene Schaufel 15 mit Grifflöchern haben, die auch zum Einstellen der Fersen des Fahrers dienen können. Der vordere Bereich 16 der Kufen ist verbreitert (Fig. 5).

Die Kufen 12, 13 sind über zwei bügelartige und vorzugsweise zum Abfangen von Stößen federnde Verbindungsglieder 18, 19 miteinander verbunden, die an den Kufen über Gelenke 20 angreifen.

Die Gelenke 20 bestehen im dargestellten Beispiel aus an den Kufen befestigten schräg U-förmigen Bügeln 21 (s. insbesondere Fig. 2), in denen ein Gelenkstück 22 um einen Bolzen 22 schwenkbar gelagert ist. Der Bolzen 23 wird durch eine Feder 24, die in einer Ausnehmung des Gelenkstücks 22 angeordnet ist, in die in Fig. 2 dargestellte Lage gedrückt, in dem sein Ende 25 in ein Loch an einem Schenkel und sein verdickter Kopf 26 in einen vergrößerten Lochabschnitt am anderen Schenkel des Bügels 21 eingreift. Von dem vergrößerten Lochabschnitt führt ein schmalerer Durchbruch 27 (Fig. 1) nach außen. Durch Ziehen des Bolzens entgegen der Federkraft 24 (in Fig. 2 nach links oben) kommen das Ende 25 und der Kopf 26 aus den ihnen entsprechenden Durchbrüchen und das Gelenkstück 22 kann aus dem Bügel 21 herausgezogen werden, wobei der dünnere Teil des Bolzens 23 durch den schmalen Durchbruch 27 hindurchläuft. Das Gelenk ist also mit einem Handgriff demontierbar und erlaubt das Abnehmen der Kufen von den Verbindungsgliedern zum Transport. Es ist zu erkennen, daß der Bolzen 23 in Fahrtrichtung 28 schräg aufwärts weisend angeordnet ist, und damit eine schräge Verkantungsachse 29 festlegt, die unter einem Winkel von 20 bis 60°, vorzugsweise 30 bis 40° gegenüber der Kufenauflagefläche 14 geneigt ist, jedoch in einer zur Kufenauflagefläche senkrechten Längsebene verläuft. Im dargestellten Beispiel sind jeweils beide Seiten der Verbindungsglieder 18, 19 durch Gelenke 20 über schräge Verkantungsachsen 29 mit den Kufen verbunden, von denen jeweils die beiden zu einer Kufe gehörenden Achsen in der gleichen senkrechten Ebene verlaufen. Jeweils ein Gelenk an jeder Kufe könnte jedoch auch durch ein anderes Gelenk ersetzt sein, das keine in der gleichen Richtung schräge Achse aufweist, dafür aber mehrere Freiheitsgrade hat, wie beispielsweise Kugel-, Gummigelenke oder dergleichen. Zur gewünschten Wirkung wird je Kufe nur ein Gelenk mit einer schrägen Verkantungsachse benötigt, wobei diese beiden Gelenke am gleichen oder an unterschiedlichen Verbindungsgliedern angeordnet sein können (auch diagonal).

Die beiden Verbindungsglieder 18, 19 sind in ihrem äußeren Bereich, etwa oberhalb der Kufen, durch stangenförmige Längsverbindungen 30 miteinander verbunden. Die Längsverbindungen 30 sind zur Führung der Verbindungsglieder oder der Kufen nicht notwendig, sondern dienen in erster Linie als Griffe und Lenkeinrichtungen. Sie sind mit den Verbindungsgliedern 18, 19 über Kugelgelenke 31 verbunden. Hier wäre jedoch auch eine Lagerung mit einer ähnlichen Schrägführung wie beim Gelenk 20 oder eine elastische Gelenkverbindung, beispielsweise ein Gummilager oder ein kardanisches Lager möglich.

In der Mitte der bogenförmig gekrümmten Verbindungsglieder 18, 19 sind Sitztragarme 32 angeordnet, die von den Verbindungsgliedern nach vorn ragen. Sie sind hakenförmig gebogen und haben an ihrem vorderen Ende eine Aufnahmebohrung für einen Lagerstift 33, der an einem Sitzbefestigungsbeschlag 34 angebracht ist. An diesem ist mittels einer Schraube 35 und eines Zwischenstückes 36 ein elastisches Glied befestigt, das aus zwei Gummielementen 37, 38 in Form dicker Scheiben oder Hohlzylinder besteht, durch die die Schraube 35 hindurchragt und die je einen Sitztragarm zwischen sich halten. Die Schraube 35 ragt durch eine Öffnung der Sitztragarme durch und ist über das Zwischenstück 36 mit dem Sitzbefestigungsbeschlag verbunden.

Der Lagerstift 33 ist unter einem Winkel gegenüber der Horizontalen (Lauffläche 14) geneigt und bildet zusammen mit dem elastischen Element eine Lagerung um eine Sitzbefestigungsachse 39, die in die gleiche Richtung weist wie die Verkantungsachse 29, jedoch etwas steiler ist. Beide Sitzbefestigungsachsen 39 liegen in Geradeaus-Stellung des Schlittens in einer vertikalen Mittellängsebene. Die Achse 39 bildet sich durch die Verbindung zwischen dem schrägen Stift 33 und dem Schnittpunkt der Mittelachse der Schraube 35 mit dem Sitztragarm 32. Die Sitzbefestigungsachse 39 könnte auch aus einfachen scharnierartigen Gelenken entsprechend den Gelenken 20 bestehen, die eine entsprechende Schräge haben. Die vorliegende Ausführung schafft aber einerseits einen Ausgleich für eventuelle Flucht- oder Montageungenauigkeit und sorgt andererseits für eine Rückstellkraft, die den Sitz und damit den gesamten Schlitten in die Geradeaus-Stellung zu bewegen sucht, wenn keine äußeren Kräfte vorliegen. Auf den Sitzbefestigungsbeschlägen 34 ist ein Sitz 40 in Form eines sich leicht trapezförmig nach vorn verjüngenden Brettes angebracht. Der Sitz kann entsprechend der Verwendungsform des Schlittens in der Form und Material angepaßt sein und beispielsweise auch aus einer profilierten Kunststoffschale bestehen. Ein im wesentlichen ebener Sitz hat jedoch den Vorteil, daß der Fahrer sowohl in sitzender als auch in liegender Stellung auf dem Schlitten fahren kann.

Die Funktion des Schlittens nach den Fig. 1 bis 5 ist wie folgt: In der in Fig. 1 gezeigten Geradeaus-Stellung sind die beiden Kufen nicht versetzt und bei dieser Ausführungsform zueinander parallel und ihre beiden Laufflächen 14 liegen in einer Ebene. Der Sitz liegt mittig oberhalb der Kufen, die Sitzfläche ist parallel zu den Laufflächen 14. Der Fahrer kann auf dem Schlitten sitzen oder liegen und entweder mit den Händen die Grifflöcher 17, den vorderen Querträger 18, daran angebrachte Griffe, bzw. die Längsverbindungen 30 ergreifen oder seine Fersen in die Löcher 17 oder auf den vorderen Querträger 18 stellen.

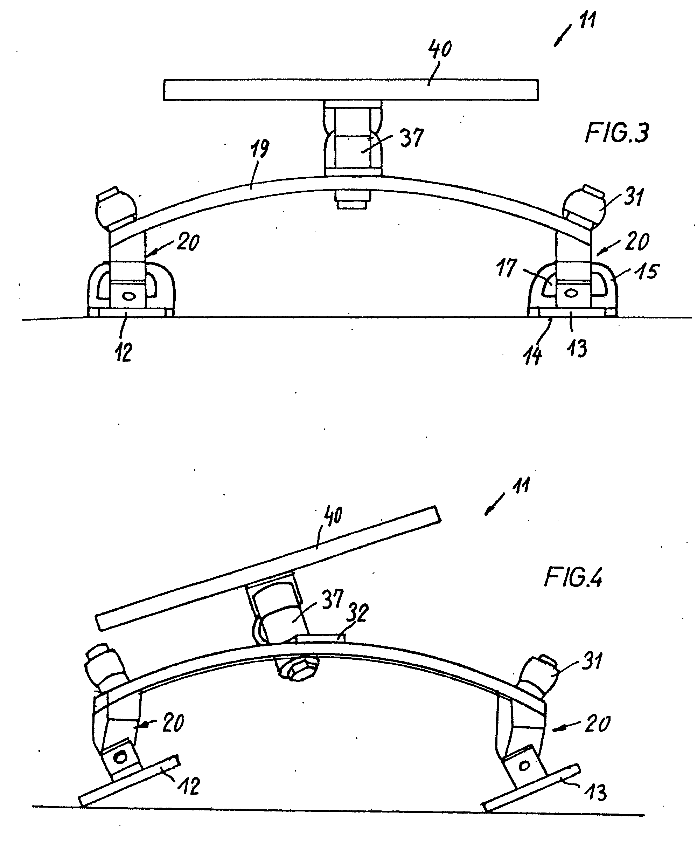

Bei Schrägfahrten zum Hang (Fahrten in geneigtem Gelände außerhalb der Fallinie) und bei Kurvenfahren können die Kufen aus der in Fig. 3 dargestellten Geradeaus-Stellung in die in Fig. 4 gezeigte verkantete Stellung gebracht werden. Dies kann vom Fahrer durch Verlagerung seines Schwerpunktes und einer damit verbundenen Neigung und Verschiebung der Sitzfläche und/oder durch Längsverschiebung der Kufen gegeneinander geschehen. Als Handhabe zur gegenseitigen Verschiebung der Kufen können die Verbindungselemente, die Längsverbindungen 30 oder die Kufen selbst verwendet werden.

Wenn bei der dargestellten Ausführungsform eine Kufe, z.B. die in Fig. 5 untere bzw. in Fig. 4 rechte, gegenüber der anderen nach vorn geschoben wird, so stellen sich die Verbindungsglieder 18, 19, die bisher rechtwinklig zu den Kufen standen, schräg zu diesen, bleiben aber, ebenso wie die Kufen, zueinander parallel. Durch die Schräge der Verkantungsachsen 29 werden die Kufen jedoch gegeneinander verkantet, und zwar bei der dargestellten Schräge nach vorn aufwärts, so, daß die vorgeschobene Kufe mit ihrer Innenkante und die zurückgeschobene Kufe mit der Außenkante tiefer liegt. Dies bedeutet, daß der Schlitten auf einer ebenen Fläche mit den beschriebenen Kanten aufliegen würde. Der Betrag der Verkantung richtet sich einerseits nach dem Betrag der Längsverschiebung der Kufen gegeneinander und andererseits nach dem Winkel, den die Verkantungsachse 29 mit der Horizontalen bildet. Je kleiner dieser Winkel ist, um so stärker wird die Verkantung in Abhängigkeit von dem Winkel, den die Verbindungsglieder mit der Kufenlängsachse bilden.

Durch die Schrägstellung der Verbindungsglieder werden auch die Sitztragarme verschwenkt. Wie aus Fig. 5 zu erkennen ist, wird dabei der Sitz 40 von seiner Mittellage zwischen den Kufen beim Ausführungsbeispiel in Richtung auf die zurückverschobene Kufe 12 zu bewegt. Der Betrag dieser Verschiebung hängt davon ab, wie die in dieser Ebene wirksamen Drehpunkte der Gelenke 20 im Vergleich zum Anlenkungspunkt des Sitzes an den Sitztragarmen liegen. Wenn, wie beim dargestellten Ausführungsbeispiel, der Sitzanlenkungspunkt durch die Sitztragarme weit nach vorn verschoben wird, so verschiebt sich der Sitz in Richtung auf die Kufe 12. Würden die Sitztragarme nach hinten weisen, so wäre eine umgekehrte Verschiebung die Folge.

Durch die Schräge der wirksamen Sitzbefestigungsachsen 39 wird der Sitz nicht nur verschoben, sondern auch verschwenkt, wie aus Fig. 4 zu erkennen ist. Diese Verschwenkung erfolgt bei dieser Ausführung so, daß sich der Sitz zu der zurückliegenden, also bei Schrägfahrt am Hang höheren Kufe hin neigt, so daß in diesem Falle der Sitz weniger steil ist als der Hang. Der Sitz neigt sich um so mehr, je geringer der Winkel der Achse 39 gegenüber der Horizontalen ist. Bei Kurvenfahrt, bei der, ähnlich wie bei einem Ski, die Kufen so geneigt sind, daß die kurveninneren Kanten tiefer liegen, ist dann der Sitz ebenfalls zum Kurveninneren hin geneigt, was der natürlichen Kurvenlage entspricht. Durch diese Geometrie und insbesondere auch durch die Breite der Kufen, wird trotz der Verschwenkung der Schwerpunkt des Fahrers bei der verkanteten Stellung nach Fig. 4 gegenüber der unverkanteten nach Fig. 3 etwas angehoben, so daß der Schlitten stets in die Lage nach Fig. 3 zurückzukehren sucht. Er befindet sich dort also in einem stabilen Gleichgewicht der Kräfte. Dazu hilft, wie bereits ausgeführt, die Gummilagerung des Sitzes durch die Gummielemente 37, 38 mit.

In Fig. 1 ist strichliert angedeutet, daß auf den Kufen je eine Skibindung 41 üblicher Bauart angebracht sein kann. Da die Kufen von den Verbindungsgliedern 18, 19, die durch den Sitz miteinander verbunden sind, abnehmbar sind, können sie, beispielsweise für Schleppliftfahrten oder zum Laufen in tiefem Schnee, wie übliche Skier vom Fahrer angeschnallt werden, während er den Sitz tragen kann. Es wäre auch möglich, die Skibindungen mit den an den Kufen festen Teilen der Gelenke 20 baulich zu verbinden oder die Bindungen an diesen Teil einhängbar zu machen.

Die Lenkung des Schlittens erfolgt durch die unterschiedlichen Belastungsverhältnisse der Kufen bzw. durch deren Verkantung und wird durch die Verbreiterung der Kufen im vorderen Bereich wirksam unterstützt. Der Fahrer kann insbesondere, wenn er noch unerfahren ist, auch in üblicherweise die Füße zur Lenkung mit heranziehen.

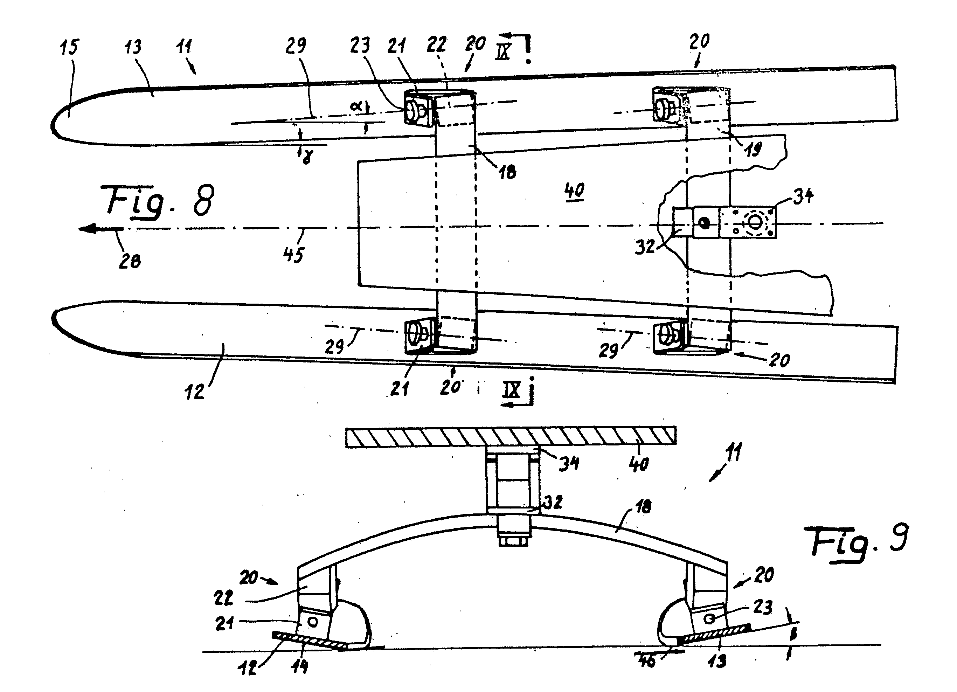

In den Fig. 6 und 7 ist eine Befestigung des Sitzes 40 gezeigt, bei der der Sitz gegenüber den Verbindungselementen 18, 19 nicht zwangsweise verschoben oder verschwenkt wird. Er ist von einer Seite über ein Gummielement 42 und hinten über eine Brücke mit Gummielementen 43 mit den Verbindungsgliedern verbunden. Die Brücke 44 ist über eine Achse 45 und Schrauben mit dem Verbindungsglied 19 verbunden und hat die Form einer Platte, die von beiden Seiten von den Gummielementen 43 eingeschlossen ist, die ihrerseits über Schraubbolzen am Sitz 40 befestigt sind. Durch diese Verbindung ist der Sitz zwar gefedert und vom Fahrer in gewisser Weise nach rechts und links kippbar und kann sich außerdem gegenüber den Verbindungsgliedern soweit drehen, daß er bei deren Verschwenkung in der Längsachse des Schlittens bleibt. Eine Neigung des Sitzes ist unabhängig von der Verkantung der Kante. Die Brücke 44 ist nur beispielhaft erwähnt. Es könnte an dieser Seite ebenfalls ein übliches Gummifeder- und Dämpfungselement 42 verwendet werden, wie es am Verbindungsglied 18 gezeigt ist.

Während bei den Fig. 1 bis 5 die Verkantungsachsen 29 in einer Ebene verliefen, die sowohl zur vertikalen Mittelebene, als auch zu einer auf der Lauffläche 14 senkrecht stehenden Ebene parallel war, liegt bei der bevorzugten Ausführungsform nach den Fig. 8 und 9 die Achse 29 zwar in einer auf der Kufenauflagefläche 14 senkrechten Ebene 44 (Fig. 9), ist jedoch, wie aus Fig. 8 zu erkennen ist, gegenüber einer vertikalen Mittelebene, die sich in den Fig. 8 und 9 durch die Mittellinie 45 darstellt, schräg und zwar laufen die Achsen 29 in Fahrtrichtung 28 aufeinander zu. Dies wird erreicht, indem das Gelenkstück 22 an den jeweils beiden Enden der Verbindungselemente 18, 19 schräg montiert sind und zwar ebenfalls nach vorne zusammenlaufend. Durch das Zusammenwirken der zueinander parallelen Verbindungsglieder 18, 19, der schrägachsigen Gelenke 20 und der Kufen ergibt sich somit die in Fig. 9 dargestellte verkantung der Kufen in der neutralen Stellung, in der die beiden Kufen in Fahrtrichtung 28 unverschoben nebeneinanderliegen. Die Kufen sind also in dieser neutralen oder Geradeausfahrt-Stellung etwas nach innen verkantet und laufen auf ihren Innenkanten 46.

Der in Fig. 8 angedeutete Winkel $\alpha$ für die Schrägstellung der Achsen sollte unter 10° liegen, desgleichen der Schrägstellungswinkel $\beta$ der Kufen.

Es ist ferner zu erkennen, daß die Kufen zur Fahrtrichtung 28 nicht parallel sind, sondern mit dieser einen Winkel $\gamma$ bilden, der vorzugsweise unter 4° beträgt. Die dadurch erzielte Pflugstellung der Kufen trägt zur Richtungsstabilisierung und Verbesserung der Lenkeigenschaften bei. Erreicht wird diese Pflugstellung bei Fig. 8 und 9 dadurch, daß bei im übrigen identischer Ausbildung der Verbindungsglieder 18, 19 diese an den Kufen 12, 13 versetzt montiert sind, indem die Bügel der vorderen Gelenke 20 mehr zur Außenkante und die der hinteren Gelenke mehr zur Innenkante der Kufe Montiert sind.

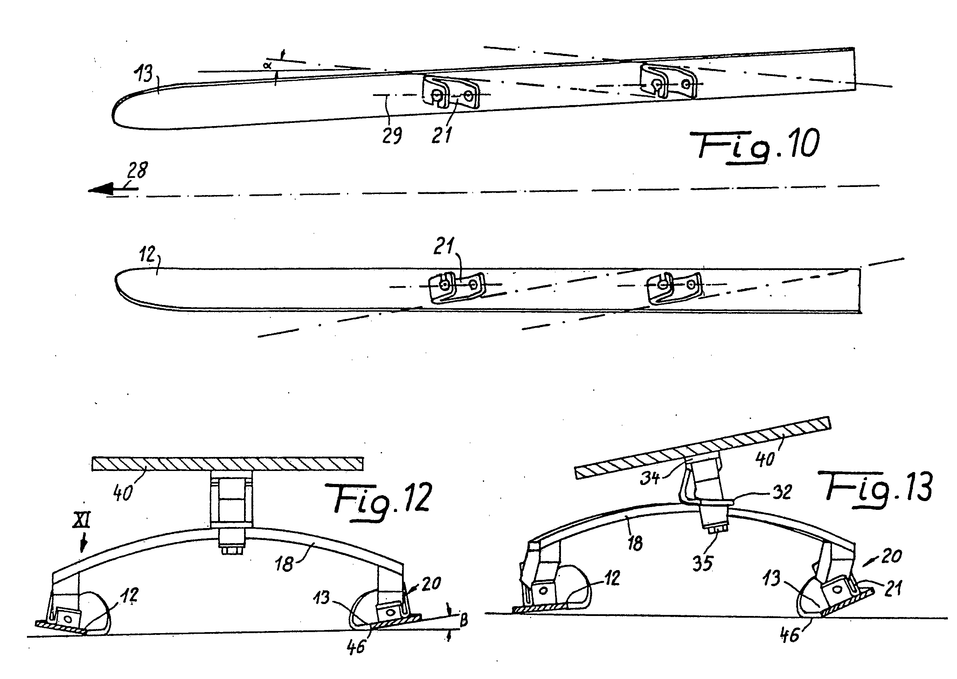

Bezüglich der Befestigung des Sitzes 40 ist, wie aus Fig. 13 zu erkennen ist, gegenüber Fig. 1 bis 5 unterscheidlich, daß infolge der Tatsache, daß die Sitzbefestigungsachse 29 gegenüber der Verkantungsachse 39 und damit den Gelenken 20 sowie den Verbindungsgliedern 18, 19 entgegen der Fahrtrichtung, d.h. zurückverschoben, angeordnet ist, der Sitz 40 sich in Richtung auf diejenige Kufe verschiebt, die in einer Kurven- oder Schrägfahrtstellung die nach vorn verschobene kurvenäußere oder Tal-Kufe ist. Diese wird also durch die Verschiebung des Sitzes in dieser Richtung vom Gewicht des Schlittenfahrers stärker belastet, was weiterhin zur Verbesserung der Fahreigenschaften beiträgt.

Die Ausführungsformen nach den Fig. 10 bis 15 entsprechen der nach Fig. 8 in allen Einzelheiten bis auf die Anbringung der an sich auch gleichen Gelenke 20 an den Kufen bzw. Verbindungsgliedern 18, 19.

Die Fig. 10 und 11 zeigen, daß die Verkantung der Kufen in der Neutralstellung (Fig. 12) dadurch erzielt wird, daß die Bügel 21, d.h. die an der Kufe befestigten Elemente der Gelenke 20 unter dem Winkel $\alpha$ schräg zur Kufenlängsrichtung angeordnet sind. Man kann diesen Winkel, ebenso wie bei der Ausführungsform nach den Fig. 8 und 9 auch auf die Fahrtrichtung 28 beziehen, muß dabei lediglich den Pflugwinkel $\gamma$ berücksichtigen. Die Gelenkstücke 22 sind an den Verbindungsgliedern 18, 19 so montiert, daß sie in senkrechter Draufsicht auf die verkanteten Kufen, in Fahrtrichtung weisen. In Fig. 10 sind zur Vereinfachung der Darstellung die Verbindungsglieder mit dem Sitz und den Gelenkstücken weggelassen. Aus Fig. 11 ist jedoch zur erkennen, wie die in Fahrtrichtung weisende Bohrung mit dem schräg montierten Bügel zusammenwirkt und dabei die Achsschräge für den Winkel $\alpha$ entsteht, die ebenfalls zu der in Fig. 12 dargestellten Verkantung der Kufen in der neutralen Stellung um den Winkel $\beta$ (weniger als 10°) führt.

Fig. 13, die bezüglich der Sitzneigung und -verschiebung bereits erläutert ist, zeigt eine Schrägfahrt- oder Kurvenstellung, bei der durch Verschiebung der Kufen gegeneinander in Fahrtrichtung eine Verkantung der Kufen entsteht, wobei beide Kufen in die gleiche Richtung gekantet werden. Infolge der Vorverkantung (Fig. 12) wird jedoch die vorverschobene Kufe 13, die die kurvenäußere bzw. Tal-Kufe ist, stärker verkantet als die zurückverschobene, kurveninnere bzw. Berg-Kufe 14. Die kurveninnere Kufe wird am Beginn der Verkantung noch auf ihrer Innenkante laufen und über eine Stellung hinweg, in der sie flach auf dem Boden aufliegt in die in Fig. 13 dargestellte Stellung kommen, in der sie auf ihrer Außenkante läuft.

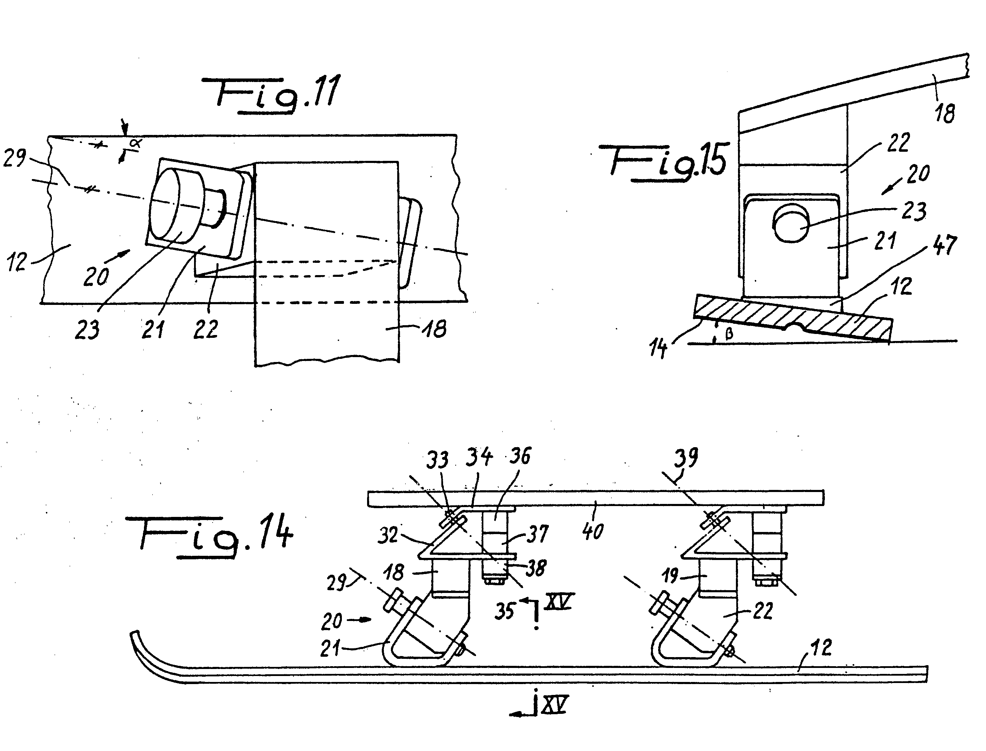

Bei der Ausführungsform nach Fig. 14 und 15 ist unterschiedlich, daß die Gelenke 20 (im übrigen denen nach Fig. 8 bis 13 gleich), so angeordnet sind, daß die Achsen 29 zur Mittelebene 45 bzw. zur nur wenig davon abweichenden Kufenlängsrichtung parallel sind. Das an der Kufe feste Teil des Gelenkes 20, d.h. der Bügel 21 ist jedoch (Fig. 14), beispielsweise durch einen Keil 47 so auf der Kufe montiert, daß diese die gewünschte Verkantungsstellung um den Winkel $\beta$ einnimmt. Die Vorverkantung der Kufen kann also auf verschiedene Weise ohne wesentliche Änderung der Gelenke erreicht werden. Es könnte sogar eine Verstellbarkeit vorgesehen sein, um den Schlitten an unterschiedliche Gelände oder Benutzungsanforderungen anpassen zu können. So könnte beispielsweise bei der Ausführungsform nach Fig. 15 der Bügel 21 über ein Scharnier auf den Kufen befestigt sein, so daß die Schräge mit einer Einstellschraube eingestellt werden könnte. Das gleiche gilt für die Pflugstellung. Bei der Ausführung nach den Fig. 10 bis 13 ist die Pflugstellung durch unterschiedlich lange Verbindungsglieder 18, 19 erreicht, so daß der Abstand zwischen den Gelenken 20 vorn geringer ist als hinten. Die Verkantung und die Pflugstellung können nicht nur einzeln, sondern auch in Kombination benutzt werden, und die verschiedenen Arten, diese Kufenstellungen zu erreichen, können miteinander in beliebiger Weise kombiniert werden. Durch eine starke Pflugstellung kann der Schlitten z.B. auf vereisten oder steilen Bahnen, eine stärkere natürliche Bremsung erhalten.

Es ist auch möglich, durch entsprechend umgekehrte Neigung der Verkantungsachsen die gleiche Verkantung durch das Verschieben der jeweils anderen Kufe zu bewirken, so daß die Tal- bzw. kurvenäußere Kufe nicht wie beim Ausführungsbeispiel, vor-, sondern zurückverschoben wird. In diesem Falle sind die darauf bezogenen Definitionen entsprechend zu ändern.

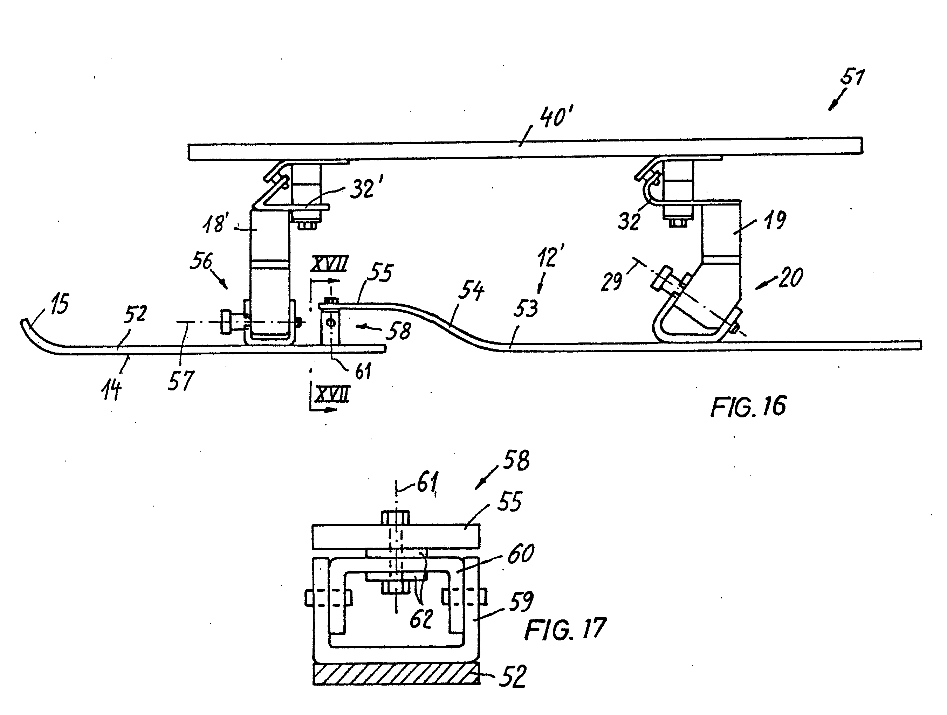

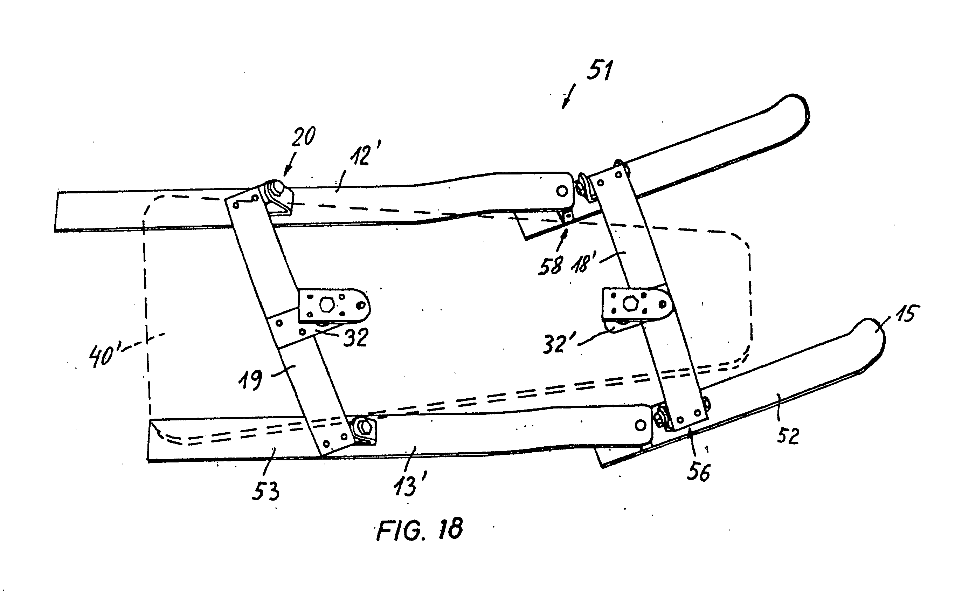

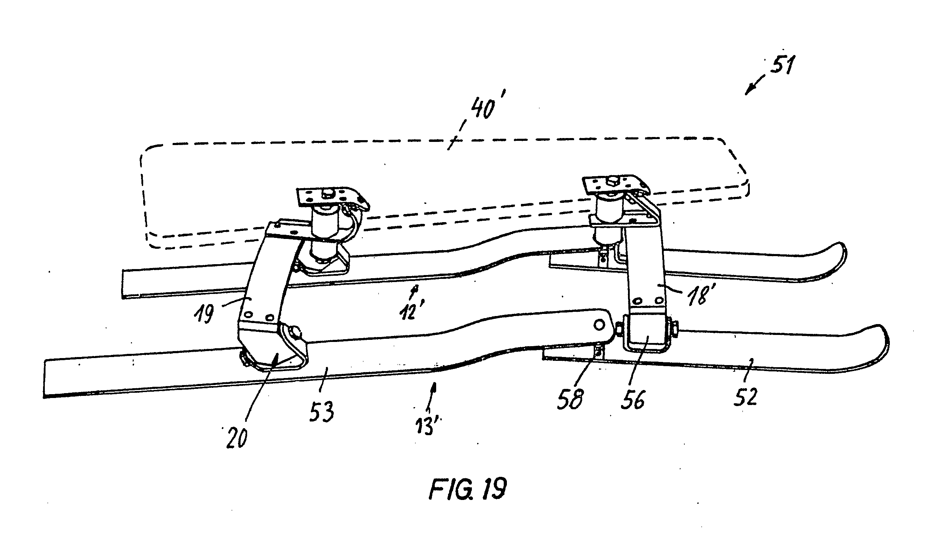

In den Fig. 16 bis 19 ist ein Schlitten 51 gezeigt, bei dem die Kufen 12', 13' aus vorderen und hinteren Abschnitten 52, 53 bestehen. Die hintere Kufe 53 hat in ihrem vorderen Bereich eine Aufwärtskrümmung 54 und einen daran anschliessenden höher liegenden horizontalen Abschnitt 55.

Der hintere Kufenabschnitt 53 ist mit einem Verbindungsglied 19 über zwei Gelenke 20 verbunden und an dem Verbindungsglied 19 ist der Sitz 40' über ein Sitzbefestigungsgelenk verbunden, das ebenso wie das Verbindungsglied 19 und die Gelenke 20 genau den in Fig. 1 beschriebenen entsprechen.

Die vorderen Kufenabschnitte 52 sind kurze skiartige Kufenstücke mit einer Schaufel 15, die jedoch im vorliegenden Beispiel nicht durchbrochen ist. Auch sind die Kufen vorn nicht verbreitert. Die Kufenabschnitte 52 sind über je ein Gelenk 56 mit einem Verbindungsglied 18' verbunden. Die Gelenke 56 entsprechen in der Bauweise den bereits beschriebenen Gelenken 20, jedoch ist die Gelenkachse 57 horizontal, d.h. sie verläuft in Kufenlängsrichtung. Die vorderen und hinteren Kufenabschnitte 52, 53 sind über ein kardanartiges Gelenk 58 miteinander verbunden, das am hinteren Ende des vorderen Kufenabschnittes 52 angeordnet ist und dieses mit dem horizontalen Abschnitt 55 des hinteren Kufenabschnittes so verbindet, daß sich diese Kufenabschnitte zwar um eine horizontale und vertikale Querachse zur Kufenlängserstreckung gegeneinander bewegen können, jedoch die Kufenauflageflächen zueinander parallel bleiben. Das bedeutet also, daß die Verkantung der hinteren Kufenabschnitte 53 durch das Gelenk 20 auch bei einer gegenseitigen Auslenkung auf die vorderen Kufenabschnitte übertragen wird. Ein entsprechendes Gelenk ist in Fig. 17 dargestellt, das aus einem auf dem Kufenabschnitt 52 befestigten U-Bügel 59 einem darin durch horizontale Lagerstifte befestigten, ebenfalls U-förmigen Zwischenstück 60 und einer senkrechten Achse 61 besteht, die unter Zwischenlage von Gleitscheiben 62 mit dem Abschnitt 55 des hinteren Kufenabschnittes 53 verbunden ist. Da in diesem Fall die Hauptbewegung eine Schwenkung um die in Fig. 16 und 17 vertikale Achse 61 ist, könnte eventuell die Schwenkung um die beiden horizontalen Achsen entfallen, wenn eine entsprechende federnde Beweglichkeit durch elastische Elemente vorgesehen ist. Es ist in jedem Falle vorzuziehen, bei allen Gelenken eine gewisse Elastizität und federnde Beweglichkeit zuzulassen, damit einerseits Fluchtungsungenauigkeit, die beispielsweise durch Verbiegungen im Betrieb auftreten können, ebenso ausgeglichen werden wie Bodenunebenheiten oder dergleichen.

Die vordere Sitzbefestigung erfolgt über ein Gelenk, das in seinem Grundaufbau dem hinteren Sitzbefestigungsgelenk entspricht. In diesem Falle ist jedoch der Sitztragarm 32' gegenüber dem Verbindungselement 18' nach hinten angeordnet. Die Achse, die bei dem Schlitten 51 die Sitzverschiebung und Längsausrichtung zum Schlitten bestimmt, ist in diesem Falle die Achse 61 bzw. die Ebene zwischen den beiden Achsen 61 auf beiden Seiten des Schlittens.

Die Wirkungsweise der Ausführungsform nach Fig. 16 bis 19 ist wie folgt: Bei einer Lenkbewegung, die wiederum durch Gewichtsverlagerung und/oder unmittelbare Beeinflussung des vorderen Verbindungselementes 18' oder der Kufen geschehen kann, werden die beiden vorderen Kufen 52, die durch das Verbindungselement 18' verbunden sind, parallel verschwenkt, ohne daß sie sich gegeneinander längs verschieben. Dafür sorgen die horizontalen Schwenkachsen 57. Da über die Gelenke 58 die hinteren Kufenabschnitte 53 an den vorderen auch auf Zug verbunden sind, folgen diese und verschieben sich dabei in Längsrichtung gegeneinander. Daraus ergibt sich eine Schrägstellung des hinteren Verbindungsgliedes 19, das über die schrägen Achsen 29 der Gelenke 20 eine Verkantung der hinteren Kufenabschnitte bewirkt, die über das Gelenk 58 auch auf die vorderen Kufenabschnitte 52 übertragen wird. Der Sitz neigt sich dabei in gleicher Weise wie bei dem ersten Ausführungsbeispiel beschrieben, zur Kurveninnenseite hin, während die Kufen auch hier so verkantet sind, daß die Kufeninnenkanten (bei ebener Unterlage) den Boden berühren. Es tritt hier also bei Kurvenfahrten nicht die Erscheinung ein, daß die Außenkanten greifen, was zum Sturz führen könnte.

Dadurch, daß die Gelenke 58 am hinteren Teil der vorderen Kufenabschnitte sind, ergibt sich eine gute und schmale Spurhaltung, die die erreichbaren Geschwindigkeiten erhöht.

Es ist möglich, alle möglichen Lenkhilfen vorzusehen, wie Lenkstangen, Handgriffe, Fußstützen oder dergleichen. Da trotz der unterschiedlichen Funktion der vorderen und hinteren Gelenke die beiden Verbindungselemente zueinander parallel verschwenkt werden, ist es auch möglich, die Verbindungsstangen 30 vorzusehen, die ebenfalls zum Lenken benutzt werden können. Diese sind besonders vorteilhaft zum Festhalten auf dem Schlitten. Die vorliegende Ausführungsform mit im vorderen Bereich parallel und ohne Längsverschiebung zueinander verschiebbaren Kufen, ist besonders bevorzugt. Es wäre jedoch auch möglich, durch eine um 180° verdrehte Anordnung die hinteren Kufen parallel zu führen und die vorderen Kufen in Längsrichtung gegeneinander verschiebbar zu machen, in dem man dort schrägachsige Gelenke verwendet.

**Patentansprüche**

1. Schlitten mit verkantbaren Kufen (12, 12', 13, 13') und wenigstens zwei etwa parallel verschwenkbaren, die Kufen (12, 12', 13, 13') mit Hilfe von Kufengelenken (20) derart verbindenden Verbindungsgliedern (18, 19), daß bei der Verkantung zumindest einander entsprechende Abschnitte der Kufen im wesentlichen in Längsrichtung gegeneinander verschiebbar sind, sowie mit einem mit den Verbindungsgliedern (18, 19) mit Hilfe mindestens zweier Gelenke verbundenen Sitz (40), der bei Verkantung der Kufen (12, 12', 13, 13') verlagerbar ist, wobei die Achsen (29, 39) mindestens eines Kufengelenkes (20) für jede Kufe (12, 12', 13, 13') und mindestens eines Sitzgelenkes in einer zur Kufenauflagefläche senkrechten, etwa parallel zur Längsrichtung verlaufenden Ebene liegen und die Achsen (29) der Kufengelenke (20) geneigt sind, dadurch gekennzeichnet, daß die Achse (39) mindestens eines Sitzgelenkes derart schräg verläuft, daß bei Verkantung der Kufen (12, 12', 13, 13') der Sitz (40) in Richtung auf die nach vorn oder nach hinten verschobene Kufe (12, 12', 13, 13') neigbar ist.

2. Schlitten nach Anspruch 1, dadurch gekennzeichnet, daß die Achse (39) mindestens eines Sitzgelenkes derart versetzt angeordnet ist, daß bei Verkantung der Kufen (12, 12', 13, 13') der Sitz (40) in Richtung auf die nach vorn oder die nach hinten verschobene Kufe (12, 12', 13, 13') seitlich verschiebbar ist.

3. Schlitten nach Anspruch 1 oder 2, dadurch gekennzeichnet, daß die Neigungsrichtung der Sitzgelenksachse (39) gleich ist wie die der Verkantungsachsen (29).

4. Schlitten nach einem der vorhergehenden Ansprüche, dadurch gekennzeichnet, daß die Verbindungsglieder (18, 19, 18', 19') insbesondere in vertikaler Richtung federnd ausgebildet sind.

5. Schlitten nach einem der vorhergehenden Ansprüche, dadurch gekennzeichnet, daß die Kufen (12, 13, 12', 13') über vorzugsweise nach Art von einrastbaren Bolzen (23) ausgeführte Schnellverbindungen (20, 56) lösbar mit den Verbindungsgliedern (18, 19, 18') verbindbar sind.

6. Schlitten nach einem der vorhergehenden Ansprüche, dadurch gekennzeichnet, daß die Kufen (12, 13) abweichend von der Parallelen vorn einen geringeren Abstand voneinander haben als hinten, wobei vorzugsweise die Abweichung der Kufenlängsrichtung von der Parallelen weniger als 4° beträgt.

7. Schlitten nach Anspruch 6, dadurch gekennzeichnet, daß der Querabstand zwischen den Verkantungsachsen (29) an dem vorderen Verbindungsglied (18) geringer ist als derjenige an dem hinteren Verbindungsglied (19).

8. Schlitten nach Anspruch 6, dadurch gekennzeichnet, daß bei gleichen Querabständen der Verkantungsachsen (29) voneinander die Befestigungspunkte der Verkantungslagerteile (Bügel 21) an den Kufen (12, 13) vorn in Richtung auf die Außenkanten der Kufen und hinten in Richtung auf die Innenkanten (46) versetzt sind.

9. Schlitten nach einem der vorhergehenden Ansprüche, dadurch gekennzeichnet, daß die Kufen (12, 13) in neutraler Stellung (Geradeausfahrtstellung) derart verkantet sind, daß ihre Innenkanten (46) tiefer liegen als die Außenkanten, wobei bei Kurven- oder Schrägfahrt die Verkantung der vorgeschobenen kurvenäußeren bzw. Tal-Kufe (13) stärker ist als die der anderen Kufe (12).

10. Schlitten nach Anspruch 9, dadurch gekennzeichnet, daß die Verkantungsachse (29) in der Schnittlinie einer zur Schlittenauflagefläche senkrechten ersten Ebene und einer zur Kufenauflagefläche (14) senkrechten zweiten Ebene liegt, wobei die Ebenen unter einem Winkel ($\alpha$) von weniger als 10° zueinander verlaufen.

11. Schlitten nach Anspruch 10, dadurch gekennzeichnet, daß die an der Kufe (12, 13) angebrachten Teile der Verkantungsachsführung (Bügel 21) nach vorn ausgespreizt schräg auf den Kufen (12, 13) befestigt sind und/oder daß das die Verkantungsachse (29) an dem Verbindungsglied (18, 19) lagernde Teil (Gelenkstück 22) nach hinten ausgespreizt an den Verbindungsgliedern (18, 19) angebracht ist.

12. Schlitten nach einem der vorhergehenden Ansprüche, dadurch gekennzeichnet, daß mehrere Verbindungsglieder (18, 19) vorgesehen sind, daß wenigstens jeder Kufe (12, 13) je eine Verkantungsachse (29) zugeordnet ist, während die Verbindungsglieder im übrigen über Gelenke mit mehr als einer freien Achse mit den Kufen verbunden sind.

13. Schlitten nach einem der vorhergehenden Ansprüche, dadurch gekennzeichnet, daß die Kufen (12', 13') in Längsrichtung geteilt und Kufenabschnitte (52), vorzugsweise die vorderen, zur Lenkung des Schlittens (51) aus der Kufenlängsachse der anderen (vorzugsweise hinteren) Kufenabschnitte (53) auslenkbar sind, wobei die auslenkbaren Kufenabschnitte (52) im wesentlichen parallel zueinander bleiben und vorzugsweise in Längsrichtung nicht gegeneinander verschoben sind, während die anderen, vorzugsweise hinteren Kufenabschnitte (53) über die schrägen Verkantungsachsen (29) mit wenigstens einem Verbindungsglied (19) verbunden sind und die nicht in Längsrichtung gegeneinander verschiebbaren, vorzugsweise vorderen Kufenabschnitte (52) über im wesentlichen horizontale Längs-Verkantungsachsen (57) mit einem vorderen Verbindungsglied (18) verbunden sind.

14. Schlitten nach Anspruch 13, dadurch gekennzeichnet, daß die vorderen mit den hinteren Kufenabschnitten (52, 53) über je ein kardanartiges Gelenk (58) verbunden sind, dessen eine Achse im wesentlichen senkrecht und die andere parallel zur Kufenauflagefläche sowie quer zur Kufenlängsrichtung verläuft, und das vorzugsweise am hinteren Ende der vorderen Kufenabschnitte (52) angeordnet ist.

15. Schlitten nach einem der vorhergehenden Ansprüche, dadurch gekennzeichnet, daß der Betrag der Neigung zur Horizontalen bei den Sitzgelenksachsen (39) größer ist als bei den Verkantungsachsen (29).

**Revendications**

1. Traîneau comportant des patins basculables (12, 12', 13, 13') et au moins deux éléments de couplage (18, 19), pouvant pivoter sensiblement parallèlement, couplant des patins (12, 12', 13, 13') à l'aide d'articulations de patin (20) de manière que lors du basculement au moins des sections des patins correspondant entre elles puissent être déplacées l'une par rapport à l'autre sensiblement suivant la direction longitudinale, ainsi qu'un siège (40) couplé aux éléments de couplage (18, 19) à l'aide d'au moins deux articulations, qui peut être décalé lors du basculement des patins (12, 12', 13, 13'), les axes (29, 39) d'au moins une articulation de patin (20) pour chaque patin (12, 12', 13, 13') et d'au moins une articulation de siège se trouvant dans un plan s'étendant sensiblement parallèlement à la direction longitudinale, perpendiculaire à la surface d'appui des patins, et les axes (29) des articulations de patin (20) étant inclinés, caractérisé par le fait que l'axe (39) d'au moins une articulation de siège s'étend obliquement de manière que lors du basculement des patins (12, 12', 13, 13') le siège (40), puisse être incliné en direction du patin (12, 12', 13, 13') déplacé vers l'avant ou vers l'arrière.

2. Traîneau suivant la revendication 1 caractérisé par le fait que l'axe (39) d'au moins une articulation de siège est disposé de façon décalée de manière que lors du basculement des patins (12, 12', 13, 13') le siège (40) puisse être déplacé latéralement en direction du patin (12, 12', 13, 13') déplacé vers l'avant ou vers l'arrière.

3. Traîneau suivant la revendication 1 ou 2, caractérisé par le fait que le sens d'inclinaison de l'axe (39) de l'articulation de siège est le même que celui des axes de basculement (29).

4. Traîneau suivant l'une des revendications précédentes, caractérisé par le fait que les éléments de couplage (18, 19, 18', 19') présentent une constitution élastique notamment dans la direction verticale.

5. Traîneau suivant l'une des revendications précédentes, caractérisé par le fait que les patins (12, 13, 12', 13') peuvent être couplés de façon amovible avec les éléments de couplage (18, 18', 19, 19') par l'intermédiaire de liaisons rapides (20, 56) réalisées de préférence suivant le type de goujons verrouillables (23).

6. Traîneau suivant l'une des revendications précédentes, caractérisé par le fait que les patins (12, 13) ont à l'avant une distance mutuelle plus faible qu'à l'arrière, en s'écartant de directions parallèles, l'écart de la direction longitudinale des patins par rapport aux directions parallèles étant de préférence moindre que 4°.

7. Traîneau suivant la revendication 6, caractérisé par le fait que la distance transversale entre les axes de basculement (29) est plus faible au niveau de l'élément de couplage avant (18) qu'au niveau de l'élément de couplage arrière (19).

8. Traîneau suivant la revendication 6, caractérisé par le fait que dans le cas de distances transversales identiques entre les axes de basculement (29) les points de fixation des parties de support de basculement (étrier 21) sur les patins (12, 13) sont décalés vers l'avant en direction des bords extérieurs des patins et vers l'arrière en direction des bords intérieurs (46).

9. Traîneau suivant l'une des revendications précédentes, caractérisé par le fait que les patins (12, 13) sont basculés dans une position neutre (position d'avance rectiligne) de manière que leurs bords intérieurs (46) soient plus bas que les bords extérieurs tandis que dans le cas d'un trajet courbe ou oblique, le basculement du patin (13) extérieur à la courbe ou du côté aval, déplacé vers l'avant, est plus important que celui de l'autre patin (12).

10. Traîneau suivant la revendication 9, caractérisé par le fait que l'axe de basculement (29) se trouve sur la ligne d'intersection d'une premier plan perpendiculaire à la surface d'appui du traîneau et d'une second plan perpendiculaire à la surface d'appui (14) des patins, les plans s'étendant en formant entre eux un angle ($\alpha$) de moins de 10°.

11. Traîneau suivant la revendication 10, caractérisé par le fait que les parties du guidage (étrier 21) de l'axe de basculement disposées sur le patin (12, 13) sont fixées sur les patins (12, 13) en s'étendant obliquement vers l'avant et en dehors et/ou que la partie (pièce d'articulation 22) supportant l'axe de basculement (29) sur l'étément de couplage (18, 19) est disposée sur les éléments de couplage (18, 19) en s'étendant vers l'arrière et en dehors.

12. Traîneau suivant l'une des revendications précédentes, caractérisé par le fait que plusierus éléments de couplage (18, 19) sont prévus, qu'à chaque patin (12, 13) au moins est respectivement associé un axe de basculement (29), tandis que les éléments de couplage sont par ailleurs couplés aux patins par l'intermédiaire d'articulations comportant plus d'un axe libre.

13. Traîneau suivant l'une des revendications précédentes, caractérisé par le fait que les patins (12', 13') sont subdivisés suivant la direction longitudinale et que des sections (52) des patins, de préférence les sections avant, peuvent être déviées de l'axe longitudinal des autres sections (de préférence arrière) pour diriger le traîneau (51), les sections (52) des patins pouvant être déviées restant sensiblement parallèles l'une par rapport à l'autre et de préférence n'étant pas décalées l'une par rapport à l'autre suivant la direction longitudinale, tandis que les autres sections (53) des patins, de préférence arrière, sont couplées à au moins un élément de couplage (19) par l'intermédiaire des axes de basculement obliques (29), et les sections (52) des patins, de préférence avant, ne pouvant pas être déplacées l'une par rapport à l'autre suivant la direction longitudinale, sont couplées à un élément de couplage (18) avant, par l'intermédiaire d'axes de basculement longitudinaux (57) sensiblement horizontaux.

14. Traîneau suivant la revendication 13, caractérisé par le fait que les sections de patin avant sont respectivement couplées aux sections de patin arrière (52, 53) par l'intermédiaire d'une articulation (58) du type à cardan, dont un axe est sensiblement vertical et dont l'autre axe s'étend parallèlement à la surface d'appui des patins ainsi que transversalement par rapport à la direction longitudinale des patins, et qui est disposée de préférence sur l'extrémité arrière de la section avant (52) des patins.

15. Traîneau suivant l'une des revendications précédentes, caractérisé par le fait que la valeur de l'inclinaison par rapport à l'horizontale dans le cas des axes d'articulations (39) du siège est plus importante que dans le cas des axes de basculement (29).

## Claims

1. Sledge with tiltable runners (12, 12', 13, 13') and at least two approximately parallel pivotable connecting members (18, 19) interconnecting the runners (12, 12', 13, 13') with the aid of runner joints (20) in such a way that during tilting at least corresponding portions of the runner are substantially longitudinally movable relative to one another, as well as with a seat (40) connected to the connecting members (18, 19) with the aid of at least two joints and which can be displaced on tilting the runners (12, 12', 13, 13'), the axes (29, 39) of at least one runner joint (20) for each runner (12, 12', 13, 13') and at least one seat joint being located in a plane perpendicular to the runner bearing surface and approximately parallel to the longitudinal direction and the axes (29) of the runner joints (20) are inclined, characterized in that the axis (39) of at least one seat joint is inclined in such a way that on tilting the runners (12, 12', 13, 13') seat (40) can be inclined in the direction of the forwardly or rearwardly displaced runner (12, 12', 13, 13').

2. Sledge according to claim 1, characterized in that the axis (39) of at least one seat joint is displaced in such a way that on tilting the runners (12, 12', 13, 13') the seat (40) is laterally displaceable in the direction of the forwardly or rearwardly displaced runner (12, 12', 13, 13').

3. Sledge according to claims 1 or 2, characterized in that the direction of inclination of the seat joint axis (39) is the same as that of the tilting axes (29).

4. Sledge according to one of the preceding claims, characterized in that the connecting members (18, 19, 18', 19') are constructed resiliently, particularly in the vertical direction.

5. Sledge according to one of the preceding claims, characterized in that the runners (12, 13, 12', 13') are detachably connectable with the connecting members (18, 19, 18') by means of quick-release connections (20, 56) preferably constructed in the manner of engageable bolts (23).

6. Sledge according to one of the preceding claims, characterized in that the runners (12, 13) are not parallel and have a smaller spacing at the front than at the rear, the deviation of the runner longitudinal direction from the parallel preferably being less than 4°.

7. Sledge according to claim 6, characterized in that the transverse spacing between the tilting axes (29) on the front connecting member (18) is less than that of the rear connecting member (19).

8. Sledge according to claim 6, characterized in that with the tilting axes (29) having the same transverse spacings from one another, the attachment points of the tilting bearing parts (brackets 21) on runners (12, 13) are displaced towards the outer edges of the runners at the front and towards the inner edges (46) of the runners at the rear.

9. Sledge according to one of the preceding claims, characterized in that in the neutral position (straight ahead position) runners (12, 13) are tilted in such a way that their inner edges (46) are lower than their outer edges and on travelling round bends or slopes, the tilt of the advanced downhill runner (13), i.e. that on the outside of the curve, is greater than that of the other runner (12).

10. Sledge according to claim 9, characterized in that the tilting axis (29) is located in the intersection line of a first plane perpendicular to the sledge bearing surface and a second plane perpendicular to the runner bearing surface (14), the planes forming an angle ($\alpha$) of less than 10° to one another.

11. Sledge according to claim 10, characterized in that the parts of the tilt axis guide (bracket 21) fitted to the runner (12, 13) are spread out towards the front and fixed in an inclined manner to runners (12, 13) and/or that the part (articulation 22) carrying the tilt axis (29) on the connecting member (18, 19) is spread out towards the rear and fitted to connecting members (18, 19).

12. Sledge according to one of the preceding claims, characterized in that a plurality of connecting members (18, 19) are provided, that at least one tilt axis (29) is associated with each runner (12, 13), whilst the connecting members are also connected to the runners by means of joints with more than one free axis.

13. Sledge according to one of the preceding claims, characterized in that the runners (12', 13') are longitudinally subdivided and runner portions (52), preferably the front portions (51) can be diverted out of the runner longitudinal axis of the other (preferably rear) runner portions (53) for steering the sledge, the divertable runner portions (52) remaining substantially parallel to one another and are preferably not longitudinally displaced relative to one another, whereas the other, preferably rear runner portions (53) are connected with at least one connecting member (19) via the inclined tilt axes (29) and the non-longitudinally displaceable and preferably front runner portions (52) are connected to a front connecting member (18) via substantially horizontal longitudinal tilt axes (57).

14. Sledge according to claim 13, characterized in that the front runner portions are connected to the rear runner portions (52, 53) by means of in each case a cardan-like joint (58), whereof one axis is directed substantially perpendicular and the other axis is parallel to the runner bearing surface and at right angles to the longitudinal direction of the runner, and is preferably located at the rear end of the front runner portions (52).

15. Sledge according to one of the preceding claims, characterized in that the amount of the inclination to the horizontal is greater in the case of the seat joint axes (39) than with the tilt axes (29).

FIG. 1

FIG. 2

0 005 485

FIG.3

FIG.4

FIG.5

30 31 12 17 11

18 34

40

32

19 FIG.5

13

20

17

15

16

40

43 43 42

44 19 FIG.6 18

40

43

19

FIG.7

0 005 485

3

*Fig. 8*

*Fig. 9*

*Fig.10*

*Fig.12*

*Fig.13*

**Fig.15**

**Fig.11**

**Fig.14**

FIG. 16

FIG. 17

0 005 485

FIG. 18

FIG. 19